# EUROPEAN PATENT APPLICATION

(11) **EP 3 062 229 A1**
(43) Date of publication of application: **31.08.2016**
(21) Application number: 13900674.6
(22) Date of filing: 31.12.2013
(51) Int. Cl.: G06F 12/08

(54) **DATA MIGRATION METHOD, DEVICE AND PROCESSOR**

(71) Applicant: Huawei Technologies Co., Ltd., Longgang District Shenzhen, Guangdong 518129 (CN)
(72) Inventor: LAM, Kingtin, Shenzhen Guangdong 518129 (CN); HUNG, Chit Ho Dominic, Shenzhen Guangdong 518129 (CN); WANG, Cho-li, Shenzhen Guangdong 518129 (CN); YAN, Youliang, Shenzhen Guangdong 518129 (CN); ZHU, Wangbin, Shenzhen Guangdong 518129 (CN)
(74) Representative: Körber, Martin Hans
(86) International application number: PCT/CN2013/091232
(87) International publication number: WO 2015/100674

(57) **Abstract**

In embodiments of the present invention, an on-chip memory in a many-core system is partitioned, and according to a frequency at which a processor core set in each on-chip partition accesses a virtual memory page in virtual memory space that is shared among multiple processes that belong to a same application program, data corresponding to the virtual memory page is moved to an on-chip memory partition in which a processor core set whose access frequency is high is located, so that when the virtual memory page is subsequently accessed, a time delay caused by cross-partition access is reduced.

## Description

### TECHNICAL FIELD

Embodiments of the present invention relate to storage technologies, and in particular, to a data migration method and apparatus, and a processor.

### BACKGROUND

Emerging use modes that constantly appear on computers make a final user raise a higher requirement for a processing capability, that is, performance, of a processor, and annual improvement of the performance is still accelerating. Currently, a multi-core technology of building, on one chip, multiple CPU cores instead of one core is an effective method for improving the performance of the processor. The multi-core technology can enable a server to process tasks in parallel; however, in the past, multiple processors may need to be used to process tasks in parallel. In addition, a multi-core system is easier to be extended, and processing performance that is more powerful can be integrated into a smaller size, where for such a size, less power is consumed and less heat is generated.

In the prior art, an addressable on-chip memory is configured on a chip and for multiple processor cores. Compared with an off-chip memory, an on-chip memory has an advantage of a higher access speed; however, the on-chip memory has relatively small space, for example, an on-chip memory of 384 KB is configured on a particular chip provided in the prior art. However, the inventor finds that an access time of the on-chip memory is affected by a distance of an on-chip network, for example, a network for communication between cores, and a network for communication between a core and an on-chip memory, and a longer distance indicates a longer access time. For example, in a distributed shared memory model (Distributed Shared Memory Model, DSM) in a scenario of software cache consistency, when an address at which a process accesses shared virtual memory space does not belong to a memory maintained by the process, data needs to be copied from physical memory space maintained by another process to local physical memory space, and generally, a relatively long time delay is caused due to the on-chip network.

### SUMMARY

Embodiments of the present invention provide a data migration method and apparatus, and a processor, which are used to efficiently manage an on-chip memory, and reduce a time delay caused by an on-chip network.

According to a first aspect, an embodiment of the present invention provides a data migration method, applied to a many-core system, where the many-core system includes a processor that has multiple processor cores, a distributed on-chip memory is configured in the many-core system, the distributed on-chip memory is divided into multiple on-chip memory partitions, multiple processor cores are allocated to the multiple on-chip memory partitions according to a principle of proximity, multiple processes that belong to a same application program run in the many-core system, there is a section of shared virtual memory space in the on-chip memory between the processes, and the method includes:
acquiring, by a first process, a frequency at which a processor core set in each on-chip memory partition accesses a first shared virtual memory page, where the first process is any process of the multiple processes that belong to a same application program, the first shared virtual memory page is any shared virtual memory page in the shared virtual memory space, and the access frequency of the processor core set is a sum of quantities of access times of all processor cores that belong to a same on-chip memory partition;
determining, by the first process, that a frequency at which a processor core set in a second on-chip memory partition accesses the first shared virtual memory page is a first preset threshold higher than a frequency at which a processor core set in a first on-chip memory partition accesses the first shared virtual memory page, where a physical page corresponding to the first shared virtual memory page is located in the first on-chip memory partition; and
moving, by the first process, data on the physical page that corresponds to the first shared virtual memory page to the second on-chip memory partition.

With reference to the first aspect, this embodiment of the present invention provides a first possible implementation manner, where in the many-core system, a corresponding page directory table is set, in an on-chip memory partition, for multiple processes that belong to a same application program, where a correspondence between a physical page in the on-chip memory and a shared virtual memory page in the shared virtual memory space, and a frequency at which the processor core set in each on-chip memory partition accesses the shared virtual memory page are recorded in the page directory table;
the acquiring, by a first process, a frequency at which a processor core set in each on-chip memory partition accesses a first shared virtual memory page includes:
acquiring, by the first process by searching the page directory table, the frequency at which the processor core set in each on-chip memory partition accesses the first shared virtual memory page; and
after the moving, by the first process, data on the physical page corresponding to the first shared virtual memory page to the second on-chip memory partition, the method further includes:
updating, by the first process, the physical page corresponding to the first shared virtual memory page to a physical page that is in the second on-chip memory partition and that is used to store the moved data.

With reference to the first possible implementation manner of the first aspect, this embodiment of the present invention provides a second possible implementation manner of the first aspect, where a page directory history table corresponding to the page directory table is also stored in the many-core system, and is used to store a shared virtual memory page moved from the page directory table, and a history frequency at which the processor core set in each on-chip memory separately accesses, within a time period in the page directory table, the shared virtual memory page, and the method further includes:
accessing, by the first process, a second shared virtual memory page in the shared virtual memory space;
when a page fault occurs in the many-core system, searching, by the first process, the page directory table for a physical page corresponding to the second shared virtual memory page; and
when the physical page corresponding to the second shared virtual memory page is not found in the page directory table, searching the page directory history table for the second shared virtual memory page; or
when the second shared virtual memory page is found in the page directory history table, moving the second shared virtual memory page from the page directory history table to the page directory table.

With reference to the second possible implementation manner of the first aspect, this embodiment of the present invention further provides a third possible implementation manner of the first aspect, where after the second shared virtual memory page is found in the page directory history table, the method further includes:
acquiring, by the first process and from the page directory history table, a history frequency at which the processor core set in each on-chip memory partition separately accesses, within a time period of the on-chip memory, the second shared virtual memory page;
successively determining, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and moving data corresponding to the second shared virtual memory page to the target physical page; and
adding the target physical page corresponding to the second shared virtual memory page to the page directory table.

With reference to the second possible implementation manner of the first aspect, this embodiment of the present invention further provides a fourth possible implementation manner of the first aspect, where the multiple processes that belong to a same application program includes a second process which maintains a correspondence between a virtual page in the shared virtual memory space and a physical page; and after the second shared virtual memory page is found in the page directory history table, the method further includes:
sending, by the first process, a request to the second process, where the request is used to request the second process to successively determine, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and move data corresponding to the second shared virtual memory to the target physical page; and add the target physical page corresponding to the second shared virtual memory page to the page directory table.

With reference to the second possible implementation manner of the first aspect, this embodiment of the present invention provides a fifth possible implementation manner of the first aspect, where when the second shared virtual memory page is not found in the page directory history table, it is determined whether there is a target physical page that meets a preset rule in an on-chip memory partition in which a processor core that runs the first process is located;
if yes, the first process moves data corresponding to the second shared virtual memory page to the target physical page; or
if not, it is determined from near to far whether there is a target physical page that meets the preset rule in an on-chip memory partition near the on-chip memory partition in which the processor core that runs the first process is located, until the target physical page that meets the preset rule is found; and data corresponding to the second shared virtual memory page is moved to the target physical page; and
the first process places a correspondence between the second shared virtual memory page and the target physical page into the page directory table, and records, in the page directory table, a frequency at which the processor core set in each on-chip memory partition accesses the second shared virtual memory page.

With reference to any one of the third to the fifth possible implementation manners of the first aspect that are provided in this embodiment of the present invention, this embodiment of the present invention further provides a sixth possible implementation manner of the first aspect, where each physical page in the on-chip memory partition has a slot ID in the partition; and in the method, the physical page that meets the preset rule includes:
acquiring, by the first process, an index value according to an address of the second shared virtual page; and
the physical page that meets the preset rule is a physical page that has a slot ID matching the index value and that is idle.

With reference to the sixth possible implementation manner of the first aspect, this embodiment of the present invention provides a seventh possible implementation manner of the first aspect, where when none of physical pages, in all on-chip memory partitions in the many-core system, that have slot IDs matching the index value are idle physical pages, a physical page is selected, from the physical pages that have slot IDs matching the index value, as the target physical page, where an access frequency of a virtual shared memory page corresponding to the physical page is the lowest; and
before the moving data corresponding to the second shared virtual memory page to the target physical page, the method further includes:
moving, to the page directory history table, a shared virtual memory page, in the page directory table, that originally corresponds to a physical address of the target physical page, and frequencies at which the physical address of the target physical page is separately accessed by processor core sets in the on-chip memory partitions, and moving out original data in the target physical page.

With reference to the sixth possible implementation manner of the first aspect, this embodiment of the present invention further provides an eighth possible implementation manner of the first aspect, where the page directory table includes multiple entries, where a correspondence between a physical page in the on-chip memory and a shared virtual memory page in the shared virtual memory space corresponding to the physical page, and a frequency at which the processor core set in each on-chip memory partition accesses the shared virtual memory page are recorded in an entry; and a slot ID of a physical page in each entry in the page directory table is used as an index value of the entry; and the searching, by the first process, the page directory table for the second shared virtual memory page includes:
obtaining through calculation, by the first process, an index value according to the address of the second shared virtual memory page; and
determining, in the page directory table according to the index value of the entry, that there is an entry matching the obtained index value; and determining whether a shared virtual memory page in the matching entry is the same as the second shared virtual memory page.

With reference to any one of the second to the fifth possible implementation manners of the first aspect, this embodiment of the present invention further provides a ninth possible implementation manner of the first aspect, a sum of frequencies at which the processor core sets in all on-chip memory partitions access, within the time period in the page directory table, a shared virtual memory page is also recorded in the page directory history table, and the method further includes:
when remaining storage space of the page directory history table is less than a second preset threshold, discarding, by the first process in ascending order of frequency sums corresponding to all shared virtual memory pages in the page directory history table, information about a preset quantity of shared virtual memory pages whose frequency sums are the lowest, where the information about a shared virtual memory page includes the shared virtual memory page, a history frequency at which the processor core set in each on-chip memory partition accesses the shared virtual memory page, and a sum of the history access frequencies.

According to a second aspect, an embodiment of the present invention further provides a data migration apparatus, disposed in a many-core system, where the many-core system includes a processor that has multiple processor cores, a distributed on-chip memory is configured in the many-core system, the distributed on-chip memory is divided into multiple on-chip memory partitions, multiple processor cores are allocated to the multiple on-chip memory partitions according to a principle of proximity, multiple processes that belong to a same application run in the many-core system, there is a section of shared virtual memory space in the on-chip memory between the processes, the data migration apparatus is integrated into the processor, and a first process runs in the data migration apparatus, where the first process is any process of the multiple processes that belong to a same application program; and the data migration apparatus includes:
an access frequency acquiring unit, configured to acquire a frequency at which a processor core set in each on-chip memory partition accesses a first shared virtual memory page, where the first shared virtual memory page is any shared virtual memory page in the shared virtual memory space, and the access frequency of the processor core set is a sum of quantities of access times of all processor cores that belong to a same on-chip memory partition;
a migration determining unit, configured to determine whether a frequency at which a processor core set in a second on-chip memory partition accesses the first shared virtual memory page is a first preset threshold higher than a frequency at which a processor core set in a first on-chip memory partition accesses the first shared virtual memory page, where a physical page corresponding to the first shared virtual memory page is located in the first on-chip memory partition; and
a data migration unit, configured to: when a determining result of the migration determining unit is yes, move data on the physical page corresponding to the first shared virtual memory page to the second on-chip memory partition.

With reference to the second aspect, this embodiment of the present invention provides a first possible implementation manner of the second aspect, where in the many-core system, a corresponding page directory table is set, in an on-chip memory partition, for multiple processes that belong to a same application program, where a correspondence between a physical page in the on-chip memory and a shared virtual memory page in the shared virtual memory space, and a frequency at which the processor core set in each on-chip memory partition accesses the shared virtual memory page are recorded in the page directory table;
the access frequency acquiring unit is specifically configured to acquire, by searching the page directory table, the frequency at which the processor core set in each on-chip memory partition accesses the first shared virtual memory page; and
the apparatus further includes: a page directory update unit, configured to: after the data on the physical page corresponding to the first shared virtual memory page is moved to the second on-chip memory partition, update the physical page corresponding to the first shared virtual memory page to a physical page that is in the second on-chip memory partition and that is used to store the moved data.

With reference to the first possible implementation manner of the second aspect, this embodiment of the present invention further provides a second possible implementation manner of the second aspect, where a page directory history table corresponding to the page directory table is also stored in the many-core system, and is used to store a shared virtual memory page moved from the page directory table, and a history frequency at which the processor core set in each on-chip memory separately accesses, within a time period in the page directory table, the shared virtual memory page, and the data migration apparatus further includes:
an access unit, configured to access a second shared virtual memory page in the shared virtual memory space; and
a search unit, configured to: when a page fault occurs in the many-core system, search the page directory table for a physical page corresponding to the second shared virtual memory page; and when the physical page corresponding to the second shared virtual memory page is not found in the page directory table, search the page directory history table for the second shared virtual memory page, where
the page directory update unit is further configured to: when the second shared virtual memory page is found in the page directory history table, move the second shared virtual memory page from the page directory history table to the page directory table.

With reference to the second possible implementation manner of the second aspect, this embodiment of the present invention further provides a third possible implementation manner of the second aspect, where the data migration apparatus further includes:
a history access frequency acquiring unit, configured to: after the search unit finds, in the page directory history table, the second shared virtual memory page, acquire, from the page directory history table, a history frequency at which the processor core set in each on-chip memory partition separately accesses, within a time period of the on-chip memory, the second shared virtual memory page; and
a page selection unit, configured to successively determine, in descending order of the history access frequencies, which are acquired by the history access frequency acquiring unit, of the second shared virtual memory page, in the on-chip memory partition, whether there is a target physical page that meets a preset rule, until the target physical page is obtained, where
the data migration unit is further configured to move data corresponding to the second shared virtual memory page to the target physical page; and
the page directory update unit is further configured to add the target physical page corresponding to the second shared virtual memory page to the page directory table.

With reference to the second possible implementation manner of the second aspect, this embodiment of the present invention further provides a fourth possible implementation manner of the second aspect, where the multiple processes that belong to a same application program includes a second process which maintains a correspondence between a virtual page in the shared virtual memory space and a physical page; and the apparatus further includes:
an instruction unit, configured to: after the search unit finds, in the page directory history table, the second shared virtual memory page, send a request to the second process, where the request is used to request the second process to successively determine, in descending order of history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and move data corresponding to the second shared virtual memory to the target physical page; and add the target physical page corresponding to the second shared virtual memory page to the page directory table.

With reference to the second possible implementation manner of the second aspect, this embodiment of the present invention further provides a fifth possible implementation manner of the second aspect, where the apparatus further includes:
a page selection unit, configured to: when the search unit does not find, in the page directory history table, the second shared virtual memory page, determine whether there is a target physical page that meets a preset rule in an on-chip memory partition in which the data migration apparatus is located; and
if there is a target physical page that meets the preset rule in the on-chip memory partition in which the data migration apparatus is located, notify the data migration unit to move data corresponding to the second shared virtual memory page to the target physical page; or
if there is no target physical page that meets the preset rule in the on-chip memory partition in which the data migration apparatus is located, determine from near to far whether there is a target physical page that meets the preset rule in an on-chip memory partition near the on-chip memory partition in which the data migration apparatus is located, until the target physical page that meets the preset rule is found, and then notify the data migration unit to move data corresponding to the second shared virtual memory page to the target physical page, where
the page directory update unit is further configured to place a correspondence between the second shared virtual memory page and the target physical page into the page directory table, and record, in the page directory table, a frequency at which the processor core set in each on-chip memory partition accesses the second shared virtual memory page.

With reference to the third or the fifth possible implementation manner of the second aspect, this embodiment of the present invention further provides a sixth possible implementation manner of the second aspect, where each physical page in the on-chip memory partition has a slot ID in the partition; the physical page that meets the preset rule includes
the physical page that meets the preset rule includes:
acquiring, by the data migration apparatus, an index value according to an address of the second shared virtual page; and
the physical page that meets the preset rule is a physical page that has a slot ID matching the index value and that is idle.

With reference to any one of the second to the fifth possible implementation manners of the second aspect, this embodiment of the present invention further provides a seventh possible implementation manner of the second aspect, a sum of frequencies at which the processor core sets in all on-chip memory partitions access, within the time period in the page directory table, a shared virtual memory page is also recorded in the page directory history table, and the apparatus further includes:
an entry discard unit, configured to: when remaining storage space of the page directory history table is less than a second preset threshold, discard, in ascending order of frequency sums corresponding to all shared virtual memory pages in the page directory history table, information about a preset quantity of shared virtual memory pages whose frequency sums are the lowest, where the information about a shared virtual memory page includes the shared virtual memory page, a history frequency at which the processor core set in each on-chip memory partition accesses the shared virtual memory page, and a sum of the history access frequencies.

According to a third aspect, an embodiment of the present invention provides a processor, applied to a many-core system, where the many-core system includes the processor, the processor includes multiple processor cores, a distributed on-chip memory is configured in the processor, multiple processes that belong to a same application program run in the processor, there is a section of shared virtual memory space in the on-chip memory between the processes, the distributed on-chip memory is divided into multiple on-chip memory partitions, multiple processor cores are allocated to the multiple on-chip memory partitions according to a principle of proximity, and the processor includes: a processor core, a memory, a communications interface, and a bus, where a first process runs in the processor core, and the first process is any process of the multiple processes that belong to a same application program;
the processor core, the communications interface, and the memory communicate with one another by using the bus; and the communications interface is configured to receive and send data;
the memory is configured to store a program; and
the processor core is configured to execute the program in the memory, and execute the method provided in the first aspect and any one of the possible implementation manners of the method.

In embodiments of the present invention, an on-chip memory in a many-core system is partitioned, and according to a frequency at which a processor core set in each on-chip partition accesses a virtual memory page in virtual memory space that is shared among multiple processes that belong to a same application program, data corresponding to the virtual memory page is moved to an on-chip memory partition in which a processor core set whose access frequency is high is located, so that when the virtual memory page is subsequently accessed, a time delay caused by cross-partition access is reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an on-chip memory partition in a many-core system according to an embodiment of the present invention;
FIG. 2 is a flowchart of a data migration method according to an embodiment of the present invention;
FIG. 3 is a schematic flowchart of page placement according to an embodiment of the present invention;
FIG. 4 is a schematic diagram showing that a target physical page is searched for according to an index value according to an embodiment of the present invention;
FIG. 5 is a schematic structural diagram of a data migration apparatus according to an embodiment of the present invention; and
FIG. 6 is a schematic structural diagram of a processor according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

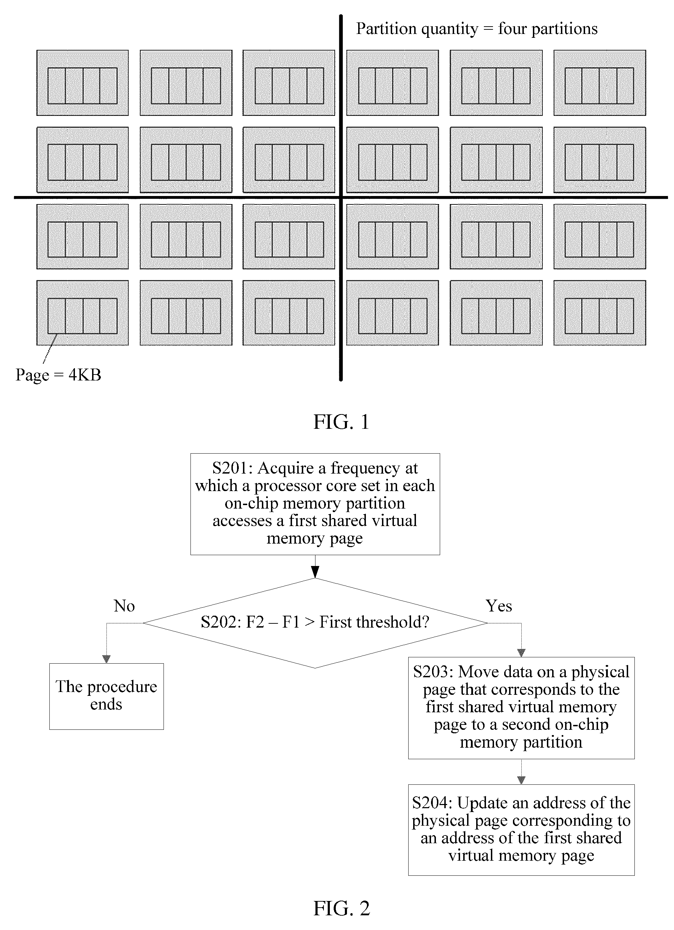

The embodiments of the present invention are applied to a many-core system, where the many-core system includes a processor that has multiple processor cores, and multiple processes that respectively belong to different application programs run in the multiple processor cores; a distributed on-chip memory is configured in the many-core system, the distributed on-chip memory is divided into multiple on-chip memory partitions, multiple processor cores are allocated to the multiple on-chip memory partitions according to a principle of proximity, and all processor cores included in each on-chip partition are referred to as one processor core set; it is assumed that the distributed on-chip memory is divided into four partitions, as shown in a schematic diagram, which is provided in FIG. 1, of an on-chip memory partition in a many-core system, where it is assumed that a size of one page page is 4 KB.

Referring to FIG. 2, based on the foregoing architecture, any process of multiple processes in the many-core system that belong to a same application program and that run in a processor core is used as an example, to describe in detail a data migration method according to this embodiment of the present invention, where as an example, there is a section of shared virtual memory space in the on-chip memory among the multiple processes that belong to a same application program, and the data migration method includes:
Step 201: A first process acquires a frequency at which a processor core set in each on-chip memory partition accesses a first shared virtual memory page.

The first process is any process of the multiple processes that belong to a same application program; the first shared virtual memory page is any shared virtual memory page in the shared virtual memory space; the processor core set is all processor cores in one on-chip partition; a frequency at which the processor core set accesses a shared virtual page is: a sum of quantities of times for all processor cores that belong to a same on-chip memory partition to access a shared virtual page, for example, a sum of quantities of times for all processor cores in one on-chip memory partition to access the first shared virtual memory page is an access frequency of a processor core set of this on-chip memory partition.

In this embodiment of the present invention, a distributed on-chip memory configured in a many-core system is partitioned; processor cores are allocated to a nearest on-chip memory partition according to a principle of proximity; a case in which one processor core is allocated to two near on-chip memory partitions and even a case in which there is no processor core in one on-chip memory partition are not excluded.

As for in which case a process is triggered to dynamically adjust data on an on-chip memory, for example, all processes that belong to a same application program reach a global synchronization point such as barrier, it may be set according to an actual case, and is not limited in this embodiment of the present invention.

Step 202: The first process determines whether a frequency F2 at which a processor core set in a second on-chip memory partition accesses the first shared virtual memory page is a first preset threshold higher than a frequency F1 at which a processor core set in a first on-chip memory partition in which a physical page corresponding to the first shared virtual memory page is located, and if the frequency F2 is the first preset threshold higher than the frequency F1, go to step 203; or if the frequency F2 is not the first preset threshold higher than the frequency F1, end the procedure.

The first process sets the first preset threshold according to an actual case, which is not limited in this embodiment of the present invention.

Step 203: The first process moves data on the physical page that is in the on-chip memory and that corresponds to the first shared virtual memory page to the second on-chip memory partition.

In a specific implementation, the first process may send a data migration instruction to a CPU to implement moving of the data on the physical page in the on-chip memory corresponding to the first shared virtual memory page to the second on-chip memory partition.

To make descriptions clearer, in this embodiment of the present invention, an on-chip memory partition in which the physical page corresponding to the first shared virtual memory page is located is referred to as a first on-chip memory partition, and any on-chip memory partition in the many-core system except the first on-chip memory partition is referred to as a second on-chip memory partition.

In a specific implementation, the first process may request an operating system to establish, in a process page table managed by the operating system, a correspondence between a first shared virtual memory page and a target physical page, and then the first process moves the data to the target physical page in the second on-chip memory.

If frequencies at which multiple processor core sets in an on-chip memory partition except the first on-chip memory partition accesses the first shared virtual memory page are all higher than the first preset threshold, an on-chip memory partition in which a processor core set that accesses the first shared virtual memory page at the highest frequency is located may be selected as the second on-chip memory partition.

In this embodiment of the present invention, an on-chip memory in a many-core system is partitioned, and according to a frequency at which a processor core set in each on-chip partition accesses a virtual memory page in virtual memory space that is shared among multiple processes that belong to a same application program, data on a physical page in an on-chip memory corresponding to the virtual memory page is moved to an on-chip memory partition in which a processor core set whose access frequency is high is located, so that when the virtual memory page is subsequently accessed, a time delay caused by cross-partition access is reduced.

In a specific implementation, in the many-core system, a corresponding page directory table is set, in an on-chip memory partition, for multiple processes that belong to a same application program, where the multiple processes in the same application program share one section of shared virtual memory space; and a correspondence between a physical page in the on-chip memory and a shared virtual memory page in the shared virtual memory space is recorded in the page directory table. During the specific implementation, a correspondence between a head address of the shared virtual memory page and a head address of the physical page may be recorded in the page directory table, so as to implement the correspondence between the physical page in the on-chip memory and the shared virtual memory page that belongs to the shared virtual memory space. A frequency at which a processor core set in each on-chip memory partition separately accesses each shared virtual memory page in the page directory table is also recorded in the page directory table. It should be noted that, in a page directory table corresponding to an application program, a shared virtual memory page corresponds to a physical page in an on-chip memory; therefore, a frequency at which a processor core set accesses each shared virtual memory page in the shared virtual memory space is equal to a frequency at which a processor core set accesses a physical page corresponding to the shared virtual memory page.

Table 1 below is an example of the page directory table:
address of a virtual memory page: by default, one page is generally 4 KB; therefore, the lowest three digits of the hexadecimal address of the virtual memory page are 0;
address of a physical page: this field is an address of a physical memory page, in an on-chip memory in the partition, of a shared virtual memory page corresponding to the address of the virtual memory page; the address of the physical page may be an actual physical address of the physical memory page, or may be an offset of a starting physical address of the on-chip memory of the partition; and
access frequency: this field records a frequency at which a processor core in each partition accesses the shared virtual memory page; an on-chip memory is globally accessible, and therefore a processor core in one partition may access an on-chip memory in another partition; frequencies at which all processor cores in one partition access the shared virtual memory page are summarized to obtain a frequency at which a processor core set in one partition accesses the shared virtual memory page, and therefore in an access frequency field Frequencies, each partition has only one access frequency value for the shared virtual memory page; the Frequencies field describes each partition by using one sub-field.

**Table 1**

| **Address of a virtual memory page** | **Address of a physical page** | **Access frequency** | | | | |
|---|---|---|---|---|---|---|
| 0C001000 | c | 5 | 12 | ... | 0 | 12 |
| 02402000 | 5A | 13 | 105 | ... | 43 | 24 |
| AFDA000 | 41 | | | ... | | |
| 33CEOOOO | 36 | | | ... | | |
| ... | ... | | | ... | | |

A frequency at which a processor core set accesses a virtual memory page may be calculated by using an aging mechanism; an access frequency is a weighted sum of frequencies at which a process accesses, at various stages, a shared virtual memory page, where a relatively large weight is given to a new stage, and a relatively small weight is given to an old stage, and the access frequency obtained in this way may better capture a latest feature that the process accesses the shared virtual memory page.

For the acquiring, by a first process, a frequency at which a processor core set in each on-chip memory partition accesses a first shared virtual memory page in step 201, the frequency at which the processor core set in each on-chip memory partition accesses the first shared virtual memory page may be acquired by searching the page directory table.

A correspondence between a shared virtual memory page in virtual memory space shared among the multiple processes and a physical page in an on-chip memory is maintained by using the page directory table, and when data corresponding to the first shared virtual memory page is moved to the second on-chip memory partition, a correspondence between the first shared virtual memory page and a physical page needs to be updated. Therefore, after step 203, the method may further include:
Step 204: The first process updates the physical page corresponding to the first shared virtual memory page to a physical page that is in the second on-chip memory partition and that is used to store the moved data.

An on-chip memory has limited space; therefore, in this embodiment of the present invention, data on a shared virtual page whose access frequency is high needs to be stored on a physical page in the on-chip memory as much as possible. When the on-chip memory is full, if there is a newly accessed shared virtual memory page, a physical page whose access frequency is low in the on-chip memory needs to be moved out of the on-chip memory, and a shared virtual memory page corresponding to the physical page whose access frequency is low is also moved out of the page directory table. A page directory history table is provided in this embodiment of the present invention, and is used to store the shared virtual memory page moved out of the page directory table, and a frequency at which a processor core set in each on-chip memory partition separately accesses, within a time period in the page directory table, the shared virtual memory page, that is, a history access frequency of the processor core set in each on-chip memory. Similar to the page directory table, one page directory history table is set for one application program, and is used to maintain information such as a shared virtual memory page moved out of a page directory table corresponding to the application program. In this embodiment of the present invention, shared virtual memory space among multiple processes that belong to a same application program is used as an example, and the page directory table is created for the shared virtual memory space; therefore, the page directory history table is also specially used to maintain a shared virtual memory page moved out of the page directory table and a history frequency at which the processor core set in the on-chip memory accesses the moved shared virtual memory page.

Table 2 below is an example of the page directory history table:
address of a virtual memory page: this field is a shared virtual memory page, and has a meaning that is the same as that of a corresponding field in the foregoing page directory table;
history access frequency; this field records a history frequency at which a processor core set in each partition accesses the shared virtual memory page; and
sum of history access frequencies: this field is a sum that is obtained by adding up a value of the history access frequency of the processor core set of each partition in the history access frequency field; the field can reveal relative importance of each shared virtual page in the page directory history table; a page with a high sum of history access frequencies is relatively more important than a page with a low sum of frequencies; if the page directory history table is full, an entry corresponding to the page with the low sum of history access frequencies is discarded first, which is subsequently described.

**Table 2**

| **Address of a virtual memory page** | **History access frequency** | | | | | **Sum of history access frequencies** |
|---|---|---|---|---|---|---|
| B2BA5000 | 20 | 99 | ... | 10 | 1 | 150 |
| BC650000 | 13 | 105 | ... | 47 | 25 | 190 |
| 4E544653 | 10 | 1 | ... | 89 | 21 | 121 |
| 48D7AF90 | 78 | 11 | ... | 96 | 2 | 187 |
| ... | ... | ... | ... | ... | ... | ... |

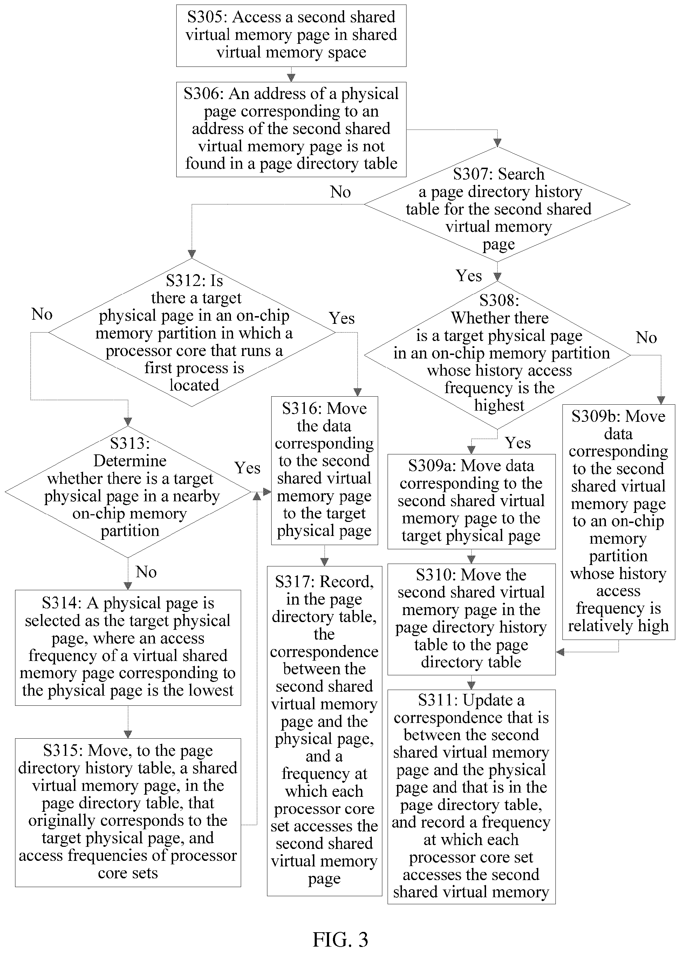

Therefore, referring to FIG. 3, in an embodiment of the present invention, when second shared virtual memory space in the shared virtual memory space is to be accessed, if the second shared virtual memory space is not found in the page directory table, it indicates that there is no physical page corresponding to the second shared virtual memory space in the current on-chip memory; placing, in the on-chip memory, data corresponding to the second shared virtual memory page into the on-chip memory, that is, a page placement procedure, may be implemented by using the following steps:
Step 305: The first process accesses a second shared virtual memory page in the shared virtual memory space.
Step 306: When a page fault occurs in a many-core system, the first process searches the page directory table for a physical page corresponding to the second shared virtual memory page; and if the physical page is not found, go to step 307.

In the many-core system, the operating system maintains, for running of a process of an application program, a process page table that has a mapping relationship between a virtual address and a physical address; in a case such as that a virtual page accessed by the process is not in the process page table, or that access is a write request but a physical page corresponding to a virtual page in the process page table receives only a read request, a page fault (page fault) occurs in the many-core system; when a page fault occurs, the first process searches the page directory table stored in the on-chip memory for the physical page corresponding to the virtual page.

Step 307: Search the page directory history table for the second shared virtual memory page; and if the second shared virtual memory page is found in the page directory history table go to step 308.

In the page directory table, only a correspondence between a physical page in the current on-chip memory and a shared virtual memory page; therefore, when an accessed shared virtual page is not found in the page directory table, the page directory history table may be searched.

Step 308: According to a history frequency at which the processor core set in each on-chip memory partition accesses, within a time period in the page directory table, a shared virtual page recorded in the page directory history table, acquire whether there is a target physical page that meets a preset rule in an on-chip memory partition whose history access frequency of the second shared virtual memory page is the highest, and if there is no target physical page that meets the preset rule in the on-chip memory partition whose history access frequency of the second shared virtual memory page is the highest, go to step 309b; or if there is a target physical page that meets the preset rule in the on-chip memory partition whose history access frequency of the second shared virtual memory page is the highest, go to step 309a.

Step 309a: The first process moves data corresponding to the second shared virtual memory page to the target physical page that meets the preset rule and that is in the on-chip memory partition with the history access frequency that is the highest; and go to step 310.

Step 309b: Successively determine, in descending order of history frequencies at which the processor core sets in all on-chip memory partitions access the second shared virtual memory page in the page directory history table, whether there is a target physical page that meets the preset rule in the on-chip memory partitions in which the processor core sets are located, until the target physical page is obtained, and move the data corresponding to the second shared virtual memory to the target physical page; and go to step 310.

Step 310: Move the second shared virtual memory page in the page directory history table to the page directory table.

In this embodiment of the present invention, after a shared virtual memory page that is the same as the second shared virtual memory page is found in the page directory history table, the method further includes:
Step 311: Update a correspondence that is between the second shared virtual memory page and the physical page and that is in the page directory table.

In this embodiment of the present invention, an access frequency is calculated by using an aging mechanism, and a history access frequency in the page directory history table does not have a great current significance, and therefore may be simultaneously moved to the page directory table, or may be not recorded in the page directory table after being moved.

It can be seen from the foregoing embodiment that, in a process of placing a shared virtual memory page in the page directory history table to the page directory table, a physical page further needs to be found in an on-chip memory to store data corresponding to the shared virtual page, so as to finally complete a correspondence between a shared virtual memory page in the page directory table and a physical page; there are multiple specific update manners, and two specific manners are provided in this embodiment of the present invention.

Manner 1: The first process performs update:
acquiring, by the first process and from the page directory history table, a history frequency at which the processor core set in each on-chip memory partition separately accesses, within the time period of the on-chip memory, the second shared virtual memory page;
successively determining, in descending order of the history access frequencies of the processor core sets in all on-chip memory partitions, in the on-chip memory partitions, whether there is a target physical page that meets a preset rule, until the target physical page is obtained, and moving the data corresponding to the second shared virtual memory to the target physical page; and
adding a correspondence between the second shared virtual memory page and the target physical page to the page directory table.

In addition, a manner 2 may also be used: The multiple processes that belong to a same application program includes a second process which maintains a correspondence between a virtual page in the shared virtual memory space and a physical page; the first process requests the second process in which the correspondence between the virtual page in the shared virtual memory space and the physical page is maintained to perform update:
sending, by the first process, a request to the second process, where the request is used to request the second process to successively determine, in descending order of the history frequencies at which the processor core sets in all on-chip memory partitions access the second shared virtual memory page, whether there is a target physical page that meets the preset rule in the on-chip memory partitions in which the processor core sets are located, until the target physical page is obtained, move data corresponding to the second shared virtual memory to the target physical page, and add the correspondence between the second shared virtual memory page and the target physical page to the page directory table.

In this embodiment of the present invention, only frequencies at which a processor core set in each on-chip partition accesses, within a time period in the page directory table, a shared virtual memory page moved out of the page directory table and a shared virtual memory page corresponding to the address may be maintained in the page directory history table, and a correspondence between a shared virtual memory page and a physical page may not need to be maintained in the page directory history table; data moved from a physical page in an on-chip memory is stored to a new physical page in an off-chip memory, and the correspondence between the shared virtual memory page and the physical page is maintained by a special process, for example, under a distributed shared memory model (Distributed Shared Memory Model, DSM), a home process maintains the correspondence between the shared virtual memory page and the physical page.

In step 307, if the shared virtual memory page that is the same as the second shared virtual memory page is also not found in the page directory history table, an on-chip memory partition in which a processor core that runs the first process is located may be directly searched for an appropriate physical page; therefore, in this embodiment of the present invention, when the second shared virtual memory page is also not found in the page directory history table, the method may further include:
Step 312: Determine whether there is a target physical page that meets the preset rule in an on-chip memory partition in which a processor core that runs the first process is located, and if yes, go to step 316; or if not, go to step 313.

The first process may request the data corresponding to the second shared virtual memory page from a process in which the correspondence between the virtual page in the shared virtual memory space and the physical page is maintained; for the convenience of description, a process that maintains a correspondence between a virtual address and a physical address of the shared virtual memory space of a process page table in the operating system is referred to as a second process; the second process and the first process belong to a same application program.

Step 313: The first process determines, from near to far, whether there is a target physical page that meets the preset rule in an on-chip memory partition near the on-chip partition in which the processor core that runs the first process is located, until the target physical page that meets the preset rule is found, and then go to step 316; or if after all on-chip memory partitions are searched, there is no target physical page that meets the preset rule, go to step 314.

A user may set, according to a need, the preset rule for determining the target physical page, for example, whether a physical page is in an idle state is used as the preset rule, and any idle physical page in an on-chip memory partition is a physical page that meets the preset rule; a specific rule for determining the target physical page may be set by the user according to an actual need.

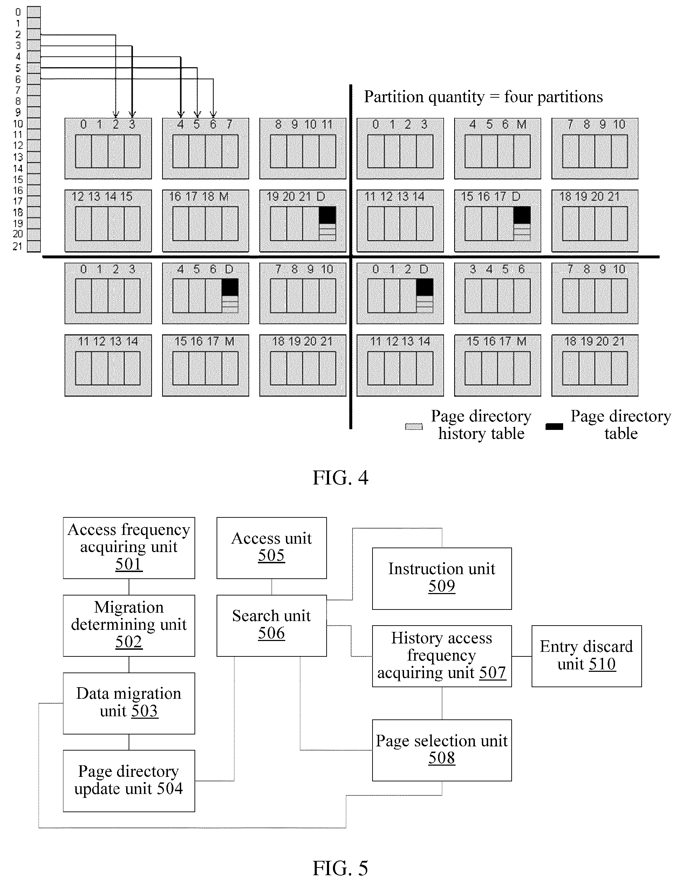

In this embodiment of the present invention, a rule for determining the target physical page is provided, to increase efficiency of searching for the target physical page. Referring to FIG. 4, each physical page in the on-chip memory partition has a slot ID in a partition in which the physical page is located, a slot ID of each physical page in one partition may be unique in the partition, or may be repetitive, for example, each partition in FIG. 4 has two same slot IDs, where a black portion is the page directory table stored in the on-chip memory partition, and a white horizontal box portion is the page directory history table, and subsequently detailed descriptions are provided; calculation is performed by using a shared virtual memory address that needs to be searched for, to obtain an index value, where hash calculation may be used as or another algorithm may be used as a specific calculation manner, which is not limited in this embodiment of the present invention; the on-chip memory partition is searched for a slot ID that matches the index value, it is determined whether a physical page in the slot ID that matches the index value is an idle physical page, and if the physical page in the slot ID that matches the index value is an idle physical page, the physical page is considered as the target physical page that meets the preset rule.

A specific matching relationship is not limited in this embodiment of the present invention, for example, it may be set that the matching succeeds when the two equal to each other, or it may be that one slot ID corresponds to one index value range, and matching is considered successful when an index value obtained for the shared virtual memory page that needs to be searched for falls within an index value range corresponding to a slot ID.

Therefore, in the foregoing steps, the determining the target physical page that meets the preset rule includes:
obtaining, by the first process, an index value according to the second shared virtual memory page; and
the physical page that meets the preset rule is a physical page that has a slot ID matching the index value and that is idle.

In a case in which the target physical page that meets the preset rule is determined by using an index value and a slot ID, which is provided in this embodiment of the present invention, when in step 311, in all on-chip memory partitions in the many-core system, none of physical pages that have slot IDs that match the index value are idle physical pages,
go to step 314: a physical page is selected from physical pages in an on-chip memory that have slot IDs matching the index value as the target physical page, where an access frequency of a virtual shared memory page corresponding to the physical page is the lowest; and go to step 315.

In a case in which the physical page that meets the preset rule is not found in an on-chip memory, that is, none of physical pages that have slot IDs that match an index value of the second shared virtual memory page are idle, data in physical pages in the on-chip memory needs to be discarded, and replaced with the data corresponding to the second shared virtual memory page; therefore, before the replacement, original data in the target physical page needs to be moved out, and an original corresponding shared virtual memory page in the page directory table and frequencies at which processor core sets in the on-chip memory partition separately access the original corresponding shared virtual memory page need to be moved to the page directory history table; therefore, before step 316, the method may further include:
Step 315: Move, to the page directory history table, a shared virtual memory page, in the page directory table, that originally corresponds to a physical address of the target physical page, and frequencies at which the physical address of the target physical page is respectively accessed by processor core sets in the on-chip memory partitions, and move out original data in the target physical page.
Step 316: The first process moves the data corresponding to the second shared virtual memory page to the target physical page.
Step 317: The first process records, in the page directory table, the correspondence between the second shared virtual memory page and the physical page, and a frequency at which the processor core set in each on-chip memory partition accesses the second shared virtual memory page.

In this embodiment of the present invention, a virtual page in shared memory space is placed in an on-chip memory according to a frequency as much as possible, where the frequency is a frequency at which a processor core set in each on-chip partition accesses the virtual page, and is placed in an on-chip memory partition whose access frequency is high as much as possible, thereby reducing an access time delay on an on-chip network.

Referring to FIG. 1, to increase efficiency of searching the page directory table for an address of a virtual memory page, this embodiment of the present invention further provides a manner of storing the page directory table: the page directory table is stored according to a location of an on-chip partition, for example, the page directory table is divided into page directory subtables whose quantity is the same as a quantity of on-chip memory partitions, where the page directory subtable includes multiple entries, and a correspondence between a physical page in an on-chip memory partition in which the page directory subtable is located and the shared virtual memory space corresponding to the physical page, and the frequency at which the processor core set in each on-chip memory partition accesses the shared virtual memory page are recorded in one entry; in FIG. 1, a black portion indicates a page directory subtable, and a white horizontal box indicates a stored page directory history table.

Based on this, in step 306, the searching, by the first process, the page directory table for a physical page corresponding to the second shared virtual memory page may include:
searching, by the first process, a page directory subtable in an on-chip partition in which a processor core that runs the first process is located for the second shared virtual memory page, and when the second shared virtual memory page is not found in a page subdirectory in the on-chip partition in which the first process is located, searching, according to a from-near-to-far principle, a page directory subtable in a remaining on-chip memory partition in the many-core system for the second shared virtual memory page, until a shared virtual memory page that is the same as the second shared virtual memory page is found or page subdirectory partitions in all on-chip memory partitions in the many-core system are searched.

However, if during page placement in an on-chip memory, a slot that meets a preset rule is searched for according to a method provided in this embodiment of the present invention, that is, in a manner of determining a slot according to an index value of an address of a shared virtual page, when a page directory table is searched, a slot ID of a physical page in each entry is used as an index value of the entry; the searching, by the first process, a page directory table in an on-chip partition for a shared virtual memory page that is the same as the second shared virtual memory page may include:
obtaining through calculation, by the first process, an index value according to the second shared virtual memory page; and
determining, in the searched page directory table according to the index value of the entry, that there is an entry matching the obtained index value; and determining whether a shared virtual memory page in the matching entry is the same as the second shared virtual memory page.

In a specific implementation, each physical page in an on-chip memory partition has one slot ID; therefore in a page directory subtable, one entry may correspond to a slot ID of a physical page in the entry, and the slot ID is used as an index value of a page directory table.

Further, the page directory history table may also be divided into page directory history subtables whose quantity is the same as a quantity of on-chip memory partitions. Similarly referring to FIG. 4, each page directory history subtable may be placed in a partition of an on-chip memory, for example, in FIG. 4, a white horizontal box portion is a page directory history subtable, and a page directory subtable may be placed in the on-chip memory, for example, a black portion in FIG. 4, so as to reduce a search time; certainly, the page directory table and the page directory history table may also be placed in an off-chip memory, which is not limited in this embodiment of the present invention.

A shared virtual memory page moved out of the page directory subtable in the on-chip memory partition, and a history frequency at which the processor core set in each on-chip memory partition separately accesses, within a time period in the page directory subtable, the moved shared virtual memory page are stored in the page directory history subtable stored in each on-chip memory partition.

Based on this, in step 307, the searching the page directory history table for the second shared virtual memory page may include:
searching, by the first process, the page directory history subtable in the on-chip memory partition in which the processor core that runs the first process is located for the second shared virtual memory page; and
when the first process does not find, in a history page subdirectory in the on-chip memory partition in which the processor core that runs the first process is located, the second shared virtual memory page, searching, according to the from-near-to-far principle, the page directory subtable in the remaining on-chip memory partition in the many-core system for the second shared virtual memory page, until the second shared virtual memory page is found or page directory history subtables in all on-chip memory partitions in the many-core system are searched.

In a specific implementation, storage space of the page directory history table is limited, and when the space is not enough, some entries in the page directory history table need to be discarded; in this embodiment of the present invention, another discarding manner is provided: a sum of frequencies at which the processor core sets in all on-chip memory partitions access, within the time period in the page directory table, a shared virtual memory page is also recorded in the page directory history table, and when remaining storage space of the page directory history table is less than a second preset threshold, the first process discards, in ascending order of frequency sums corresponding to all shared virtual memory pages in the page directory history table, information about a preset quantity of shared virtual memory pages whose frequency sums are the lowest, where the information about the shared virtual memory pages includes a shared virtual memory page, information about a frequency at which the processor core set in each on-chip memory partition separately accesses, within a time period of the on-chip memory, the shared virtual memory page, and a sum of the frequency.

Certainly, in a spirit of the discarding manner provided in this embodiment of the present invention, setting may be performed by a user according to an actual case.

In this embodiment of the present invention, an on-chip memory in a many-core system is partitioned, and page data is placed according to a frequency at which a processor core accesses an on-chip memory page, so that an on-chip access time delay is affected by an on-chip network as little as possible.

Referring to FIG. 5, an embodiment of the present invention provides a data migration apparatus 50, disposed in a many-core system, where the many-core system includes a processor that has multiple processor cores, a distributed on-chip memory is configured in the many-core system, the distributed on-chip memory is divided into multiple on-chip memory partitions, multiple processor cores are allocated to the multiple on-chip memory partitions according to a principle of proximity, multiple processes that belong to a same application run in the many-core system, there is a section of shared virtual memory space in the on-chip memory between the processes, the data migration apparatus is integrated into the processor, and a first process runs in the data migration apparatus, where the first process is any process of the multiple processes that belong to a same application program; and the data migration apparatus includes:
an access frequency acquiring unit 501, configured to acquire a frequency at which a processor core set in each on-chip memory partition accesses a first shared virtual memory page, where the first shared virtual memory page is any shared virtual memory page in the shared virtual memory space, and the access frequency of the processor core set is a sum of quantities of access times of all processor cores that belong to a same on-chip memory partition;
a migration determining unit 502, configured to determine whether a frequency at which a processor core set in a second on-chip memory partition accesses the first shared virtual memory page is a first preset threshold higher than a frequency at which a processor core set in a first on-chip memory partition in which a physical page corresponding to the first shared virtual memory page is located; and
a data migration unit 503, configured to: when a determining result of the migration determining unit 502 is yes, move data on the physical page corresponding to the first shared virtual memory page to the second on-chip memory partition.

In this embodiment of the present invention, an on-chip memory in a many-core system is partitioned, and according to a frequency at which a processor core set in each on-chip partition accesses a virtual memory page in virtual memory space that is shared among multiple processes that belong to a same application program, the provided data migration apparatus moves data corresponding to the virtual memory page to an on-chip memory partition in which a processor core set whose access frequency is high is located, so that when the virtual memory page is subsequently accessed, a time delay caused by cross-partition access is reduced.

Further, in the many-core system, a corresponding page directory table is set, in an on-chip memory partition, for multiple processes that belong to a same application program, where a correspondence between a physical page in the on-chip memory and a shared virtual memory page in the shared virtual memory space, and a frequency at which the processor core set in each on-chip memory partition accesses the shared virtual memory page are recorded in the page directory table;
the access frequency acquiring unit 501 is specifically configured to acquire, by searching the page directory table, the frequency at which the processor core set in each on-chip memory partition accesses the first shared virtual memory page; and
the data migration apparatus further includes:
   a page directory update unit 504, configured to: after the data on the physical page corresponding to the first shared virtual memory page is moved to the second on-chip memory partition, update the physical page corresponding to the first shared virtual memory page to a physical page that is in the second on-chip memory partition and that is used to store the moved data.

The correspondence between the physical page in the on-chip memory and the shared virtual page is maintained by setting the page directory table, and after the data migration is performed in the on-chip memory, the page directory table is updated.

Further, a page directory history table corresponding to the page directory table is also stored in the many-core system, and is used to store a shared virtual memory page moved from the page directory table, and a history frequency at which the processor core set in each on-chip memory partition separately accesses, within a time period in the page directory table, the shared virtual memory page, and the data migration apparatus 50 further includes:
an access unit 505, configured to access a second shared virtual memory page in the shared virtual memory space; and
a search unit 506, configured to: when a page fault occurs in the many-core system, search the page directory table for a physical page corresponding to the second shared virtual memory page; and when the physical page corresponding to the second shared virtual memory page is not found in the page directory table, search the page directory history table for the second shared virtual memory page.

Therefore, the page directory update unit 504 is further configured to: when the second shared virtual memory page is found in the page directory history table, move the second shared virtual memory page from the page directory history table to the page directory table.

Further, after or before information in the page directory history table is moved to the page directory table, data corresponding to the second virtual shared virtual page is moved to the on-chip memory, and a physical page in an on-chip memory for storing the corresponding data needs to be selected; therefore, the data migration apparatus 50 further includes:
a history access frequency acquiring unit 507, configured to: after the search unit finds, in the page directory history table, the second shared virtual memory page, acquire, from the page directory history table, a history frequency at which the processor core set in each on-chip memory partition separately accesses, within a time period of the on-chip memory, the second shared virtual memory page; and
a page selection unit 508, configured to successively determine, in descending order of the history access frequencies, which are acquired by the history access frequency acquiring unit 507, of the second shared virtual memory page, in the on-chip memory partitions, whether there is a target physical page that meets a preset rule, until the target physical page is obtained where
the data migration unit is further configured to move data corresponding to the second shared virtual memory page to the target physical page; and
the page directory update unit is further configured to add the target physical page corresponding to the second shared virtual memory page to the page directory table.

For page selection and data migration, this embodiment of the present invention further provides another manner, in which the multiple processes that belong to a same application program include a second process which maintains a correspondence between a virtual page in the shared virtual memory space and a physical page; and when page selection and data migration are to be performed, the process may be requested to perform the page selection and the data migration. Therefore, the apparatus further includes:
an instruction unit 509, configured to: after the search unit 506 finds, in the page directory history table, the second shared virtual memory page, send a request to the second process, where the request is used to request the second process to successively determine, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and move data corresponding to the second shared virtual memory to the target physical page; and add the target physical page corresponding to the second shared virtual memory page to the page directory table.

In this embodiment of the present invention, if the search unit 506 does not find, in the page directory history table, the second shared virtual memory page, in the data migration apparatus,
the page selection unit 508 is configured to: when the search unit 506 does not find, in the page directory history table, the second shared virtual memory page, determine whether there is a target physical page that meets a preset rule in an on-chip memory partition in which the data migration apparatus is located; and
if there is a target physical page that meets the preset rule in the on-chip memory partition in which the data migration apparatus is located, notify the data migration unit 503 to move data corresponding to the second shared virtual memory page to the target physical page; or
if there is no target physical page that meets the preset rule in the on-chip memory partition in which the data migration apparatus is located, determine from near to far whether there is a target physical page that meets the preset rule in an on-chip memory partition near the on-chip memory partition in which the data migration apparatus is located, until the target physical page that meets the preset rule is found, and then notify the data migration unit 503 to move data corresponding to the second shared virtual memory page to the target physical page; and
the page directory update unit 504 is further configured to place a correspondence between the second shared virtual memory page and the target physical page into the page directory table, and record, in the page directory table, a frequency at which the processor core set in each on-chip memory partition accesses the second shared virtual memory page.

In this embodiment of the present invention, an implementation manner is provided for a specific implementation of search, where each physical page in the on-chip memory partition has a slot ID in a partition; the physical page that meets the preset rule includes:
the physical page that meets the preset rule includes:
   acquiring, by the data migration apparatus, an index value according to an address of the second shared virtual page; and
   the physical page that meets the preset rule is a physical page that has a slot ID matching the index value and that is idle.

Based on this, the page selection unit 508 is further configured to: when none of physical pages, in all on-chip memory partitions in the many-core system, that have slot IDs matching the index value are idle physical pages, select a physical page, from the physical pages that have slot IDs matching the index value, as the target physical page, where an access frequency of a virtual shared memory page corresponding to the physical page is the lowest; and
the data migration unit 503 is further configured to: before moving the data corresponding to the second shared virtual memory page to the target physical page, move, to the page directory history table, a shared virtual memory page, in the page directory table, that originally corresponds to a physical address of the target physical page, and frequencies at which the physical address of the target physical page is separately accessed by processor core sets in the on-chip memory partitions, and move out original data in the target physical page.

The page directory table provided in this embodiment of the present invention may include a page directory subtable stored in each on-chip memory partition, and the page directory subtable includes multiple entries, where a correspondence between a physical page in an on-chip memory partition in which the page directory subtable is located and a shared virtual memory page of the shared virtual memory space corresponding to the physical page, and a frequency at which a processor core set in each on-chip memory partition accesses the shared virtual memory page are recorded in an entry; therefore,
in this embodiment of the present invention, the searching, by the search unit 506, the page directory table for a physical page corresponding to the second shared virtual memory page may include:
searching a page directory subtable in an on-chip partition in which the data migration apparatus is located for the second shared virtual memory page, and when the second shared virtual memory page is not found in a page subdirectory in the on-chip partition in which the data migration apparatus is located, searching, according to a from-near-to-far principle, a page directory subtable in a remaining on-chip memory partition in the many-core system for the second shared virtual memory page, until the second shared virtual memory page is found or page subdirectory partitions in all on-chip memory partitions in the many-core system are searched.

Further, this embodiment of the present invention provides a specific implementation manner for the page directory table. For example, the page directory table includes multiple entries, where a correspondence between a physical page in the on-chip memory and a shared virtual memory page in the shared virtual memory space corresponding to the physical page, and a frequency at which the processor core set in each on-chip memory partition accesses the shared virtual memory page are recorded in an entry; and a slot ID of a physical page in each entry in the page directory table is used as an index value of the entry.

Therefore, the searching, by the search unit, for the second shared virtual memory page may specifically include:
obtaining through calculation an index value according to the address of the second shared virtual memory page; and
determining, in the page directory table according to the index value of the entry, that there is an entry matching the obtained index value; and determining whether a shared virtual memory page in the matching entry is the same as the second shared virtual memory page.

Further, this embodiment of the present invention further provides an implementation manner for processing in a case of insufficient storage space of a page directory history table: a decision to discard some entries is made according to a sum of history access frequencies of a shared virtual memory page in the page directory history table; therefore,
the data migration apparatus may further include:
an entry discard unit 510, configured to: when remaining storage space of the page directory history table is less than a second preset threshold, discard, in ascending order of frequency sums corresponding to all shared virtual memory pages in the page directory history table, information about a preset quantity of shared virtual memory pages whose frequency sums are the lowest, where the information about a shared virtual memory page includes the shared virtual memory page, a history frequency at which the processor core set in each on-chip memory partition accesses the shared virtual memory page, and a sum of the history access frequencies.

The apparatus in this embodiment may be used to execute the method in the foregoing method embodiments, and their implementation principles and technical effects are similar. Details are not described herein again.

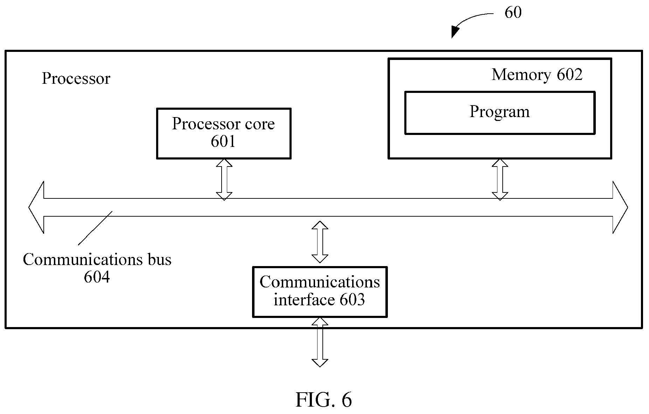

Referring to FIG. 6, an embodiment of the present invention further provides a processor 60, applied to a many-core system, where the many-core system includes the processor, the processor includes multiple processor cores, a distributed on-chip memory is configured in the processor, multiple processes that belong to a same application program run in the processor, there is a section of shared virtual memory space in the on-chip memory between the processes, the distributed on-chip memory is divided into multiple on-chip memory partitions, multiple processor cores are allocated to the multiple on-chip memory partitions according to a principle of proximity, and the processor includes: a processor core 601, a memory 602, a communications interface 603, and a bus 604, where a first process runs in the processor core 601, and the first process is any process of the multiple processes that belong to a same application program;
the processor core 601, the communications interface 603, and the memory 602 communicate with one another by using the bus 604; and the communications interface 603 is configured to receive and send data;
the memory 602 is configured to store a program; and
the processor core 601 is configured to execute the program in the memory, and execute any method according to the foregoing embodiments of the present invention.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A data migration method, applied to a many-core system, wherein the many-core system comprises a processor that has multiple processor cores, a distributed on-chip memory is configured in the many-core system, the distributed on-chip memory is divided into multiple on-chip memory partitions, multiple processor cores are allocated to the multiple on-chip memory partitions according to a principle of proximity, multiple processes that belong to a same application program run in the many-core system, there is a section of shared virtual memory space in the on-chip memory between the processes, and the method comprises:
acquiring, by a first process, a frequency at which a processor core set in each on-chip memory partition accesses a first shared virtual memory page, wherein the first process is any process of the multiple processes that belong to a same application program, the first shared virtual memory page is any shared virtual memory page in the first shared virtual memory space, and the access frequency of the processor core set is a sum of quantities of access times of all processor cores that belong to a same on-chip memory partition;
determining, by the first process, that a frequency at which a processor core set in a second on-chip memory partition accesses the first shared virtual memory page is a first preset threshold higher than a frequency at which a processor core set in a first on-chip memory partition accesses the first shared virtual memory page, wherein a physical page corresponding to the first shared virtual memory page is located in the first on-chip memory partition; and
moving, by the first process, data on the physical page that is in the on-chip memory and that corresponds to the first shared virtual memory page to the second on-chip memory partition.

2. The method according to claim 1, wherein in the many-core system, a corresponding page directory table is set, in an on-chip memory partition, for multiple processes that belong to a same application program, wherein a correspondence between a physical page in the on-chip memory and a shared virtual memory page in the shared virtual memory space, and a frequency at which the processor core set in each on-chip memory partition accesses the shared virtual memory page are recorded in the page directory table;
the acquiring, by a first process, a frequency at which a processor core set in each on-chip memory partition accesses a first shared virtual memory page comprises:
acquiring, by the first process by searching the page directory table, the frequency at which the processor core set in each on-chip memory partition accesses the first shared virtual memory page; and
after the moving, by the first process, data on the physical page corresponding to the first shared virtual memory page to the second on-chip memory partition, the method further comprises:
updating, by the first process, the physical page corresponding to the first shared virtual memory page to a physical page that is in the second on-chip memory partition and that is used to store the moved data.

3. The method according to claim 2, wherein a page directory history table corresponding to the page directory table is also stored in the many-core system, and is used to store a shared virtual memory page moved from the page directory table, and a history frequency at which the processor core set in each on-chip memory partition separately accesses, within a time period in the page directory table, the shared virtual memory page, and the method further comprises:
accessing, by the first process, a second shared virtual memory page in the shared virtual memory space;
when a page fault occurs in the many-core system, searching, by the first process, the page directory table for a physical page corresponding to the second shared virtual memory page;
when the physical page corresponding to the second shared virtual memory page is not found in the page directory table, searching the page directory history table for the second shared virtual memory page; and
when the second shared virtual memory page is found in the page directory history table, moving the second shared virtual memory page from the page directory history table to the page directory table.

4. The method according to claim 3, after the second shared virtual memory page is found in the page directory history table, further comprising:
acquiring, by the first process and from the page directory history table, a history frequency at which the processor core set in each on-chip memory partition separately accesses, within a time period of the on-chip memory, the second shared virtual memory page;
successively determining, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and moving data corresponding to the second shared virtual memory page to the target physical page; and
adding the target physical page corresponding to the second shared virtual memory page to the page directory table.

5. The method according to claim 3, wherein the multiple processes that belong to a same application program comprises a second process which maintains a correspondence between a virtual page in the shared virtual memory space and a physical page; and after the second shared virtual memory page is found in the page directory history table, the method further comprises:
sending, by the first process, a request to the second process, wherein the request is used to request the second process to successively determine, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and move data corresponding to the second shared virtual memory to the target physical page; and add the target physical page corresponding to the second shared virtual memory page to the page directory table.

6. The method according to claim 3, wherein:
when the second shared virtual memory page is not found in the page directory history table, it is determined whether there is a target physical page that meets a preset rule in an on-chip memory partition in which a processor core that runs the first process is located;
if there is a target physical page that meets the preset rule in the on-chip memory partition in which the processor core that runs the first process is located, the first process moves data corresponding to the second shared virtual memory page to the target physical page; or
if there is no target physical page that meets the preset rule in the on-chip memory partition in which the processor core that runs the first process is located, it is determined from near to far whether there is a target physical page that meets the preset rule in an on-chip memory partition near the on-chip memory partition in which the processor core that runs the first process is located, until the target physical page that meets the preset rule is found; and data corresponding to the second shared virtual memory page is moved to the target physical page; and
the first process places a correspondence between the second shared virtual memory page and the target physical page into the page directory table, and records, in the page directory table, a frequency at which the processor core set in each on-chip memory partition accesses the second shared virtual memory page.

7. The method according to any one of claims 4 to 6, wherein each physical page in the on-chip memory partition has a slot ID in the partition; and in the method, the physical page that meets the preset rule comprises:
acquiring, by the first process, an index value according to an address of the second shared virtual page; and
the physical page that meets the preset rule is a physical page that has a slot ID matching the index value and that is idle.

8. The method according to claim 7, wherein when none of physical pages, in all on-chip memory partitions in the many-core system, that have slot IDs matching the index value are idle physical pages, a physical page is selected, from the physical pages that have slot IDs matching the index value, as the target physical page, wherein an access frequency of a virtual shared memory page corresponding to the physical page is the lowest; and
before the moving data corresponding to the second shared virtual memory page to the target physical page, the method further comprises:
moving, to the page directory history table, a shared virtual memory page, in the page directory table, that originally corresponds to a physical address of the target physical page, and frequencies at which the physical address of the target physical page is respectively accessed by processor core sets in the on-chip memory partitions, and moving out original data in the target physical page.

9. The method according to claim 3, wherein the page directory table comprises a page directory subtable stored in each on-chip memory partition, and the page directory subtable comprises multiple entries, wherein a correspondence between a physical page in an on-chip memory partition in which the page directory subtable is located and a shared virtual memory page of the shared virtual memory space corresponding to the physical page, and a frequency at which a processor core set in each on-chip memory partition separately accesses the shared virtual memory page are recorded in an entry; and
the searching, by the first process, the page directory table for a physical page corresponding to the second shared virtual memory page comprises:
searching, by the first process, a page directory subtable in an on-chip partition in which a processor core that runs the first process is located for the second shared virtual memory page, and when the second shared virtual memory page is not found in the page directory subtable in the on-chip partition in which the first process is located, searching, according to a from-near-to-far principle, a page directory subtable in a remaining on-chip memory partition in the many-core system for the second shared virtual memory page, until the second shared virtual memory page is found or page subdirectory partitions in all on-chip memory partitions in the many-core system are searched.

10. The method according to claim 7, wherein the page directory table comprises multiple entries, wherein a correspondence between a physical page in the on-chip memory and a shared virtual memory page in the shared virtual memory space corresponding to the physical page, and a frequency at which the processor core set in each on-chip memory partition accesses the shared virtual memory page are recorded in an entry; a slot ID of a physical page in each entry in the page directory table is used as an index value of the entry; and the searching, by the first process, the page directory table for the second shared virtual memory page comprises:
obtaining through calculation, by the first process, an index value according to the address of the second shared virtual memory page; and
determining, in the page directory table according to the index value of the entry, that there is an entry matching the obtained index value; and determining whether a shared virtual memory page in the matching entry is the same as the second shared virtual memory page.

11. The method according to claim 9 or 10, wherein the page directory history table comprises a page directory history subtable stored in each on-chip memory partition in the many-core system, wherein a shared virtual memory page moved out of the page directory subtable in the on-chip memory partition, and a history frequency at which the processor core set in each on-chip memory partition separately accesses the moved shared virtual memory page within a time period in the page directory subtable are stored in the page directory history subtable stored in each on-chip memory partition;
when the physical page corresponding to the second shared virtual memory page is not found in the page directory table, the searching the page directory history table for the second shared virtual memory page comprises:
when the physical page corresponding to the second shared virtual memory page is not found in the page directory table, searching, by the first process, the page directory history subtable in the on-chip memory partition in which the processor core that runs the first process is located for the second shared virtual memory page; and
when the first process does not find, in a history page subdirectory in the on-chip memory partition in which the processor core that runs the first process is located, the second shared virtual memory page, searching, according to the from-near-to-far principle, a page directory history subtable in the remaining on-chip memory partition in the many-core system for the second shared virtual memory page, until the second shared virtual memory page is found or page directory history subtables in all on-chip memory partitions in the many-core system are searched.

12. The method according to any one of claims 3 to 6 or claim 9, wherein a sum of frequencies at which the processor core sets in all on-chip memory partitions access, within the time period in the page directory table, a shared virtual memory page is also recorded in the page directory history table, and the method further comprises:
when remaining storage space of the page directory history table is less than a second preset threshold, discarding, by the first process in ascending order of frequency sums corresponding to all shared virtual memory pages in the page directory history table, information about a preset quantity of shared virtual memory pages whose frequency sums are the lowest, wherein the information about a shared virtual memory page comprises the shared virtual memory page, a history frequency at which the processor core set in each on-chip memory partition accesses the shared virtual memory page, and a sum of the history access frequencies.

13. A data migration apparatus, disposed in a many-core system, wherein the many-core system comprises a processor that has multiple processor cores, a distributed on-chip memory is configured in the many-core system, the distributed on-chip memory is divided into multiple on-chip memory partitions, multiple processor cores are allocated to the multiple on-chip memory partitions according to a principle of proximity, multiple processes that belong to a same application run in the many-core system, there is a section of shared virtual memory space in the on-chip memory between the processes, the data migration apparatus is integrated into the processor, and a first process runs in the data migration apparatus, wherein the first process is any process of the multiple processes that belong to a same application program; and the data migration apparatus comprises:
an access frequency acquiring unit, configured to acquire a frequency at which a processor core set in each on-chip memory partition accesses a first shared virtual memory page, wherein the first shared virtual memory page is any shared virtual memory page in the shared virtual memory space, and the access frequency of the processor core set is a sum of quantities of access times of all processor cores that belong to a same on-chip memory partition;
a migration determining unit, configured to determine whether a frequency at which a processor core set in a second on-chip memory partition accesses the first shared virtual memory page is a first preset threshold higher than a frequency at which a processor core set in a first on-chip memory partition accesses the first shared virtual memory page, wherein a physical page corresponding to the first shared virtual memory page is located in the first on-chip memory partition; and
a data migration unit, configured to: when a determining result of the migration determining unit is yes, move data on the physical page corresponding to the first shared virtual memory page to the second on-chip memory partition.

14. The apparatus according to claim 13, wherein in the many-core system, a corresponding page directory table is set, in an on-chip memory partition, for multiple processes that belong to a same application program, wherein a correspondence between a physical page in the on-chip memory and a shared virtual memory page in the shared virtual memory space, and a frequency at which the processor core set in each on-chip memory partition accesses the shared virtual memory page are recorded in the page directory table;
the access frequency acquiring unit is specifically configured to acquire, by searching the page directory table, the frequency at which the processor core set in each on-chip memory partition accesses the first shared virtual memory page; and
the apparatus further comprises: a page directory update unit, configured to: after the data on the physical page corresponding to the first shared virtual memory page is moved to the second on-chip memory partition, update the physical page corresponding to the first shared virtual memory page to a physical page that is in the second on-chip memory partition and that is used to store the moved data.

15. The apparatus according to claim 14, wherein a page directory history table corresponding to the page directory table is also stored in the many-core system, and is used to store a shared virtual memory page moved from the page directory table, and a history frequency at which the processor core set in each on-chip memory separately accesses, within a time period in the page directory table, the shared virtual memory page, and the data migration apparatus further comprises:
an access unit, configured to access a second shared virtual memory page in the shared virtual memory space; and
a search unit, configured to: when a page fault occurs in the many-core system, search the page directory table for a physical page corresponding to the second shared virtual memory page; and when the physical page corresponding to the second shared virtual memory page is not found in the page directory table, search the page directory history table for the second shared virtual memory page, wherein
the page directory update unit is further configured to: when the second shared virtual memory page is found in the page directory history table, move the second shared virtual memory page from the page directory history table to the page directory table.

16. The apparatus according to claim 15, wherein the data migration apparatus further comprises:
a history access frequency acquiring unit, configured to: after the search unit finds, in the page directory history table, the second shared virtual memory page, acquire, from the page directory history table, a history frequency at which the processor core set in each on-chip memory partition separately accesses, within a time period of the on-chip memory, the second shared virtual memory page; and
a page selection unit, configured to successively determine, in descending order of the history access frequencies, which are acquired by the history access frequency acquiring unit, of the second shared virtual memory page, in the on-chip memory partitions, whether there is a target physical page that meets a preset rule, until the target physical page is obtained, wherein
the data migration unit is further configured to move data corresponding to the second shared virtual memory page to the target physical page; and
the page directory update unit is further configured to add the target physical page corresponding to the second shared virtual memory page to the page directory table.

17. The apparatus according to claim 15, wherein the multiple processes that belong to a same application program comprises a second process in which a correspondence between a virtual page in the shared virtual memory space and a physical page is maintained; and the apparatus further comprises:
an instruction unit, configured to: after the search unit finds, in the page directory history table, the second shared virtual memory page, send a request to the second process, wherein the request is used to request the second process to successively determine, in descending order of the history frequencies at which the processor core sets in all on-chip memory partitions respectively access the second shared virtual memory page within the time period of the on-chip memory, in the on-chip memory partitions, whether there is a target physical page that meets a preset rule, until the target physical page is obtained, and move data corresponding to the second shared virtual memory to the target physical page; and add the target physical page corresponding to the second shared virtual memory page to the page directory table.

18. The apparatus according to claim 15, wherein the apparatus further comprises:
a page selection unit, configured to: when the search unit does not find, in the page directory history table, the second shared virtual memory page, determine whether there is a target physical page that meets a preset rule in an on-chip memory partition in which the data migration apparatus is located; and
if there is a target physical page that meets the preset rule in the on-chip memory partition in which the data migration apparatus is located, notify the data migration unit to move data corresponding to the second shared virtual memory page to the target physical page; or
if there is no target physical page that meets the preset rule in the on-chip memory partition in which the data migration apparatus is located, determine from near to far whether there is a target physical page that meets the preset rule in an on-chip memory partition near the on-chip memory partition in which the data migration apparatus is located, until the target physical page that meets the preset rule is found, and then notify the data migration unit to move data corresponding to the second shared virtual memory page to the target physical page, wherein
the page directory update unit is further configured to place a correspondence between the second shared virtual memory page and the target physical page into the page directory table, and record, in the page directory table, a frequency at which the processor core set in each on-chip memory partition accesses the second shared virtual memory page.

19. The apparatus according to any one of claims 16 to 18, wherein each physical page in the on-chip memory partition has a slot ID in the partition; the physical page that meets the preset rule comprises:
the physical page that meets the preset rule comprises:
acquiring, by the data migration apparatus, an index value according to an address of the second shared virtual page; and
the physical page that meets the preset rule is a physical page that has a slot ID matching the index value and that is idle.

20. The apparatus according to claim 19, wherein the page selection unit is further configured to: when none of physical pages, in all on-chip memory partitions in the many-core system, that have slot IDs matching the index value are idle physical pages, select a physical page, from the physical pages that have slot IDs matching the index value, as the target physical page, wherein an access frequency of a virtual shared memory page corresponding to the physical page is the lowest; and
the data migration unit is further configured to: before moving the data corresponding to the second shared virtual memory page to the target physical page, move, to the page directory history table, a shared virtual memory page, in the page directory table, that originally corresponds to a physical address of the target physical page, and frequencies at which the physical address of the target physical page is separately accessed by processor core sets in the on-chip memory partitions, and move out original data in the target physical page.

21. The apparatus according to claim 15, wherein the page directory table comprises a page directory subtable stored in each on-chip memory partition, and the page directory subtable comprises multiple entries, wherein a correspondence between a physical page in an on-chip memory partition in which the page directory subtable is located and a shared virtual memory page of the shared virtual memory space corresponding to the physical page, and a frequency at which a processor core set in each on-chip memory partition accesses the shared virtual memory page are recorded in an entry; and
the searching, by the search unit, the page directory table for a physical page corresponding to the second shared virtual memory page comprises:
searching a page directory subtable in an on-chip partition in which the data migration apparatus is located for the second shared virtual memory page, and when the second shared virtual memory page is not found in a page subdirectory in the on-chip partition in which the data migration apparatus is located, searching, according to a from-near-to-far principle, a page directory subtable in a remaining on-chip memory partition in the many-core system for the second shared virtual memory page, until the second shared virtual memory page is found or page subdirectory partitions in all on-chip memory partitions in the many-core system are searched.

22. The apparatus according to claim 19, wherein the page directory table comprises multiple entries, wherein a correspondence between a physical page in the on-chip memory and a shared virtual memory page in the shared virtual memory space corresponding to the physical page, and a frequency at which the processor core set in each on-chip memory partition accesses the shared virtual memory page are recorded in an entry; and a slot ID of a physical page in each entry in the page directory table is used as an index value of the entry; and
the searching, by the search unit, the page directory table for the second shared virtual memory page specifically comprises:
obtaining through calculation an index value according to the address of the second shared virtual memory page; and
determining, in the page directory table according to the index value of the entry, that there is an entry matching the obtained index value; and determining whether a shared virtual memory page in the matching entry is the same as the second shared virtual memory page.

23. The apparatus according to any one of claims 15 to 18 or claim 21, wherein a sum of frequencies at which the processor core sets in all on-chip memory partitions access, within the time period in the page directory table, a shared virtual memory page is also recorded in the page directory history table, and the apparatus further comprises:
an entry discard unit, configured to: when remaining storage space of the page directory history table is less than a second preset threshold, discard, in ascending order of frequency sums corresponding to all shared virtual memory pages in the page directory history table, information about a preset quantity of shared virtual memory pages whose frequency sums are the lowest, wherein the information about a shared virtual memory page comprises the shared virtual memory page, a history frequency at which the processor core set in each on-chip memory partition accesses the shared virtual memory page, and a sum of the history access frequencies.

24. A processor, applied to a many-core system, wherein the many-core system comprises the processor, the processor comprises multiple processor cores, a distributed on-chip memory is configured in the processor, multiple processes that belong to a same application program run in the processor, there is a section of shared virtual memory space in the on-chip memory between the processes, the distributed on-chip memory is divided into multiple on-chip memory partitions, multiple processor cores are allocated to the multiple on-chip memory partitions according to a principle of proximity, and the processor comprises: a processor core, a memory, a communications interface, and a bus, wherein a first process runs in the processor core, and the first process is any process of the multiple processes that belong to a same application program;
the processor core, the communications interface, and the memory communicate with one another by using the bus; and the communications interface is configured to receive and send data;
the memory is configured to store a program; and
the processor core is configured to execute the program in the memory, and execute the method according to any one of claims 1 to 12.
